# EUROPEAN PATENT SPECIFICATION

(11) **EP 0 416 759 B1**
(45) Date of publication and mention of the grant of the patent: **18.05.1994**
(21) Application number: 90308864.9
(22) Date of filing: 13.08.1990
(51) Int. Cl.: B65D 81/34

(54) **Ventable rupture diaphragm-protected container for heating contained materials by microwave radiation**
Durch zerreissbare Membran gesicherter entlüftbarer Behälter zum Erhitzen des Inhalts durch Mikrowellenstrahlung
Récipient aéré protégé par une membrane déchirable pour chauffer le contenu par une radiation à micro-ondes

(30) Priority: 08.09.1989 US 404693
(43) Date of publication of application: 13.03.1991
(73) Proprietor: CEM Corporation, Matthews North Carolina 28105 (US)
(72) Inventor: Hargett, Wyatt P., Matthews, North Carolina 28105 (US); Littau, Sara E., Charlotte, North Carolina 28212 (US)
(74) Representative: Pacitti, Pierpaolo A.M.E.

(56) References cited:
- US-A- 4 219 126
- US-A- 4 553 559
- US-A- 4 672 996
- US-A- 4 672 996

## Description

This invention relates to containers suitable for holding materials to be heated by microwave radiation. More particularly, it relates to ventable containers which include rupture diaphragms and which are especially useful for holding analytical samples which are being digested by treatments with strong chemicals, such as nitric, hydrochloric and sulfuric acids. In such heatings and digestions it is often important to keep the digestion vessel sealed to prevent contamination and to prevent losses of materials and reaction products. As heating and digestion proceed the internal pressure of the container normally increases, as material therein is vaporized. To prevent damage to the container by any development of excessive pressure a rupture diaphragm is provided to vent vessel gas at a pressure lower than that which will cause significant damage to the container (and possibly to operators using it). By means of the present invention the intact rupture diaphragm is movable to allow venting of the container at the conclusion of the digestion, which facilitates earlier opening of the container and removal of the digested materials without the danger of sudden release of contents through the container opening when the container pressure is suddenly dropped to atmospheric as the closure is removed. Also, the rupture diaphragm may be moved or may be allowed to move during the digestion operation to maintain a desired pressure and temperature profile during such process. Such movement is controllable so that the exit of gases from the container can be controlled, and the closure is resealable after venting.

The invention also relates to a closure for a digestion container, which closure contains a venting passageway and a rupture diaphragm in the passageway. Such closure may also include a pressure tap connected to a monitor or a controller, and in another embodiment of the invention such tap may be in a fitting adapted to fit the closure, which fitting contains a communicating venting passageway and the rupture diaphragm from the closure.

Also within the invention are various heating and digestion processes which utilize the invented containers or ones that are similar. another aspect of the invention is an improved seal between a strengthening container body, a liner and a top closure for the container, which seal tightens at elevated temperature.

Microwave powered heating digestions of various materials, utilizing strong digesting agents, such as acids, are known and open vessel digestions of this type are described in 47 Analytical Chemistry, 1475 (A Abu Samra et al, 1975) and 50 Analytical Chemistry 1021 (P Barrett et al, 1978). Closed system microwave digestions have also been practised, as reported in 56 Analytical Chemistry 2233 (Nadkarni, 1984) and in Bureau of Mines Technical Progress Report No 120 (S A Matthews et al, 1983). Savillex corporation has marketed a lidded digestion vessel for microwave digestions which is made of Teflon® PFA, obtainable from EI DuPont de Nemours, Inc, and CEM Corporation has marketed pressure controlling accessories for use in from EI DuPont de Nemours, Inc, and CEM Corporation has marketed pressure controlling accessories for use in microwave digestions in conjunction with its MDS-81 and MDS-81-D microwave systems.

US-A-4,672,996 discloses a valved container for effecting microwave digestions, in which a flexible or semi-rigid top wall deforms to vent excess pressure. Venting may also be achieved when desired by finger pressure against an outer wall. This arrangement relies on the use of a special material for the top wall in conjunction with design parameters chosen to achieve venting at a given pressure, and thus requires redesign for each given pressure. It is also difficult to achieve a high and repeatable accuracy with a design of this nature.

To protect against the sealed digestion container being harmed (or even exploded) by a run-away digestion reaction which develops excessive pressure, a lined container inside a strengthening container body, equipped with a threaded cap to hold a closure onto the liner, has been marketed, which includes an internal rupture disc. However, such rupture disc is not part of a relief valve or controllable venting mechanism which allows venting past the rupture disc when desired, such as during the digestion process or shortly after its completion, the prior art container assemblage does not include an adapter that is useful in monitoring of pressures in the containers or in controlling venting. Neither does any such prior art or publicly used device teach desired screw or fluid pressure (sometime in response to a programmed controller) actuated venting of digestion container gas past an intact rupture diaphragm.

In accordance with the present invention a ventable container that is protected by rupture means against possibly damaging effects of high internal is characterised in that the rupture pressure means is releasably positioned to seal off a venting passageway to prevent venting from the container and release of internal pressure, and is controllably movable without rupturing from such sealing location to vent the container through the venting passageway.

The invention also provides a heating process making use of the foregoing container (as defined in Claim 12 hereinafter), and a method of using the foregoing container (as defined in Claim 19 hereinafter).

An embodiment of the invention will now be described, by way of example only, with reference to the drawings, in which:-
FIG 1 is a central vertical sectional elevational view of a container of this invention, in a sealed position;
FIG 2 is an enlarged view, in sectional elevation, of the tapered upper sealing portion of the container liner of FIG 1;

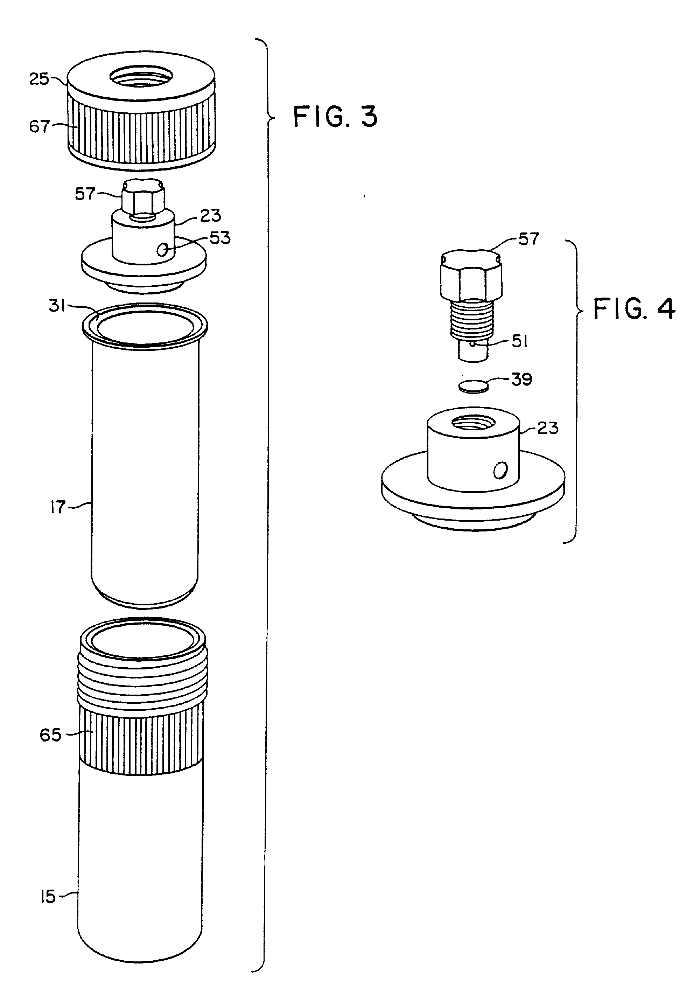

FIG 3 is a partially disassembled view of the components of the container of FIG 1;
FIG 4 is another disassembled view of some of the components of the closure showing FIG's 1-3;
FIG 5 is a perspective view of a microwave apparatus equipped with a turntable on which are positioned a plurality of containers of this invention;
FIG 6 is an enlarged perspective view of a plurality of containers of FIG 1 on a turntable, showing an adapter on one container for connection to a pressure monitor and/or controller;
FIG 7 is a central vertical sectional elevational view of a container of the invention like that of FIG'S 1-4 but equipped with an adapter that is connected to a pressure monitor or controller; and
FIG 8 is a central vertical sectional elevational view of the invented container of FIG 1, except for the special sealing construction, and with a fluid pressure operated means for holding the rupture diaphragm in place.

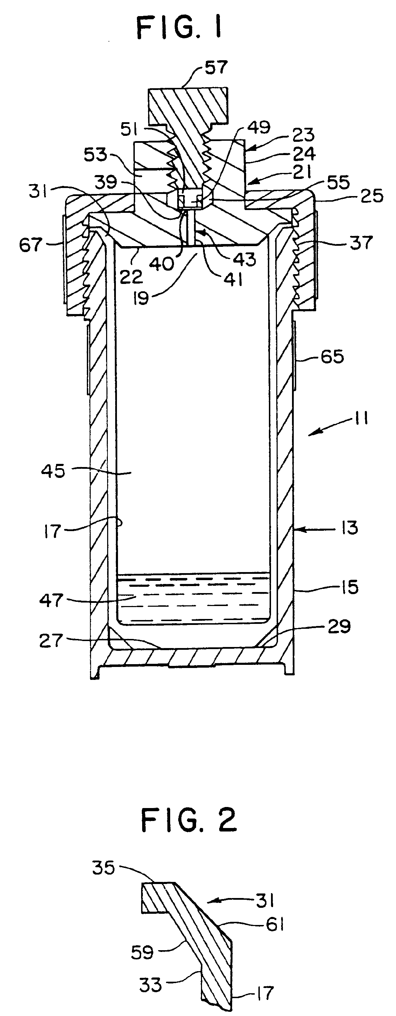

In FIG 1 there is shown ventable digestion container 11 which comprises container body means or container body 13 (which preferably is of two parts, a body 15 and a liner 17, as illustrated, each of which is of substantially cylindrical, bottomed construction), which container has an opening 19 at the top thereof which is closed by closure means 21 (which includes closure portion 23 and holding collar 25). Closure portion 23 includes sealing section 22 and boss 24. Body 15 is of a material of construction which is essentially transparent to microwave radiation and of sufficient strength (tensile strength) and other physical characteristics, including dimensions, so that it can withstand internal pressures in ranges likely to be encountered in various heating and digestion operations in which the container may be employed. Such pressure ranges will normally be from 7 to 35 kg./sq. cm., most often being in the ranges of 7 or 14 to 21 kg./sq. cm. (all pressure readings given in this specification are gauge pressures, meaning that to obtain absolute pressures one must add one atmosphere or about one kg./sq. cm.). Most suitable synthetic organic polymeric plastic materials for such body 13 are any of the polyether imides, such as those sold under the ULTEM® trademark by General Electric Corporation, but others of the "engineering plastics", fiber reinforced plastics, such as glass fiber reinforced polyesters or polyethers, or other polymers known to be of good strengths and transmissive of microwaves may also be used. Inside body 15, as a part of the container body means 13, is liner 17, which is essentially or completely transparent to microwave radiation and is also resistant to damage from chemical attack by strong chemicals, such as strong acids, often employed to digest analytical samples. Materials of construction suitable for manufacture of such liners, such as fluorinated alkylenes or perfluorocarbons, e.g., polytetrafluoroethylene and other polymers of this type sold under the tradename TEFLON® or other tradenames may be employed, with the preferred materials being TEFLON PFA and TEFLON FEP, but other chemically resistant plastics, such as chloroprene, silicone, ethylene, propylene and other suitable polymers, under the proper circumstances, may also be employed. However, at elevated temperature, such polymers and others which are satisfactorily resistant to chemical reactions with the materials being heated or by the digestion mixes are not usually sufficiently strong to resist pressures that may be developed in the container and therefore such are normally employed only as liners within strengthening body members which are made of other, stronger materials. If microwave- and other radiant energy-transmissive materials that are available or may become available are satisfactorily resistant to chemical damage from the contained materials and are strong enough to resist pressures developed during the heatings of such materials in the closed container the container body means may be made of one piece of one material, without the need for a separate liner. However, at present it appears that in the preferred form of the present invention such separate liner and a strengthening container body will usually be employed together. It will be noted that the bottom 27 of liner 17 is in contact with the interior bottom 29 of the strengthening body part 15. Also, it will be noted that at the top of liner 17, which defines opening 19, the liner includes a portion 31 which is tapered upwardly and outwardly between the top of the cylindrical wall 33 of the liner and the top peripheral portion or flange 35 thereof. It will also be noted that the parts of the strengthening body and the closure which contact the tapered or wedge shaped portion 31 of the liner are shaped accordingly. The primary reason for such construction is to improve the seals between the strengthening body, liner and closure members.

In FIG. 2 there are shown the angles made by the sides 59 and 61 of tapered liner portion 31. As illustrated, side 59 is about 30° from the vertical and side 61 is about 45° from both the vertical and the horizontal. These angles may be modified so long as a suitable wedge structure is maintained but preferably the angle between the forces will be within the range of 10 to 25°. Flange portion 35 is desirable but in some circumstances may be omitted.

Atop the container, as illustrated in FIG. 1 is closure means 23, which may be held to body means 13 by a suitable holding means, which, in the embodiment illustrated, is threaded collar 25, which screws onto threads 37 on the upper part of body 15.

A venting means is provided for the container and, in the broader aspect of the present invention, may be suitably located anywhere on the upper portion of body member 13 but in the illustrated preferred embodiment it is incorporated in and coacts with the closure. In fact, rupturable diaphragm 39, in normal intact state sealed against seating means 40̸ in the sealing section 22 of closure means 23, acts to seal off upstream portion 41 of the venting passageway 43. If rupture disc 39 is ruptured, due to a high internal pressure in the container 13, gas 45 inside the container, generated by vaporization of heated material or digestion mixture 47, will vent from the container through upstream passageway 41, through ruptured disc 39, through vertical downstream passageway 49 (which is of greater diameter than passageway 41), through horizontal transverse passageways 51 and through clearances 55, and out venting passageway 53. It will be noted that if rupture disc 39 ruptures the venting gas will exit through passageways 41, 49, 51, 55 and 53, in that order, whereas if (as will be discussed later) the rupture disc is moved from sealing contact so that it no longer seals off passageway 41 (or 43) the gas may exit primarily through passageways 41, 55 and 53. Passageway 53 may be connected by tubing (not shown in FIG. 1) or other means to another container, to an exhaust fan inlet or to the exterior of the microwave apparatus, if desired.

As illustrated in FIG. 1, closure means 21 includes the described passageways in sealing (lower) and boss (upper) portions thereof and the boss portion is internally threaded to receive a threaded stem or tightening member 57. Stem 57 may be tightened down so as to peripherally (around opening 49) press rupture diaphragm 39 against a contacting lower seat 40̸ in the closure member, to seal off passageway 43. In such sealing position the container is protected against high pressure explosions by the rupture disc 39 and the rate of release of venting gas can be regulated by changing (restricting or enlarging) the diameter of passageway 41, as well as by changing the dimensions of other parts of the venting passageway 43, to prevent too rapid a discharge of container contents, or to facilitate such discharge. When threaded stem 57 is backed off gas may be released from apparatus 11 at below the rupturing pressure (or force) for the rupture disc. Such release of pressure or venting is usually very desirable at the end of a digestion process because otherwise it will be necessary to cool the container to a temperature at which the internal pressure equals that of the atmosphere, before the closure may be removed and the digested material may be discharged so as to be further processed or analyzed. By utilizing the "discretionary" venting provision of this invention considerable time and cooling effort will be saved because the venting allows faster equalization of the internal pressure with that of the atmosphere and thereby enables the chemist or operator to remove the closure without fear of it being released too rapidly and without fear that contents will be lost, due to boiling, bubbling or bumping upon sudden pressure release, with consequent entrainment in the vented gas. When organic materials are being digested there will be an increase of pressure in the digestion container due to reactions which result in gaseous products, so even when the container is cooled in an ice bath after completion of digestion considerable pressure could remain in the container, making it hazardous to remove the closure in the absence of venting means.

In FIG's. 3 and 4 are shown various parts of the assembled container of FIG. 1 so except for a few details no further discussion of these figures and such parts is required. However, it should be noted that because of the tight seals obtained between the container body, liner and closure, a highly preferred form of which seal is shown in FIG. 1, it is not necessary to utilize mechanical equipment, such as a torque wrench, in the assembly of the container. Ridges 67, on cap 25, and 65, on body 15, provide sufficient gripping surfaces so as to facilitate hand tightening, which satisfactorily holds the container parts in sealing engagement, even at elevated temperature, which was not possible with "ordinary" seals.

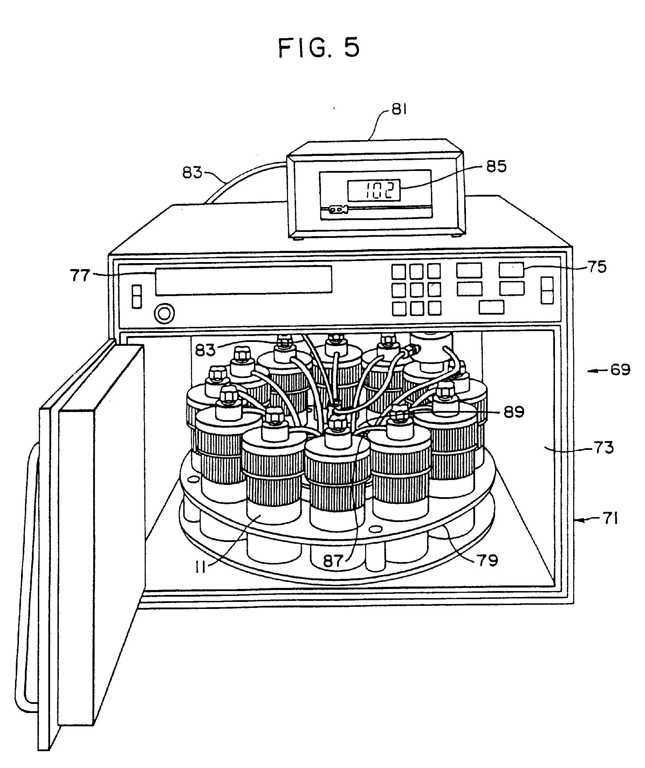

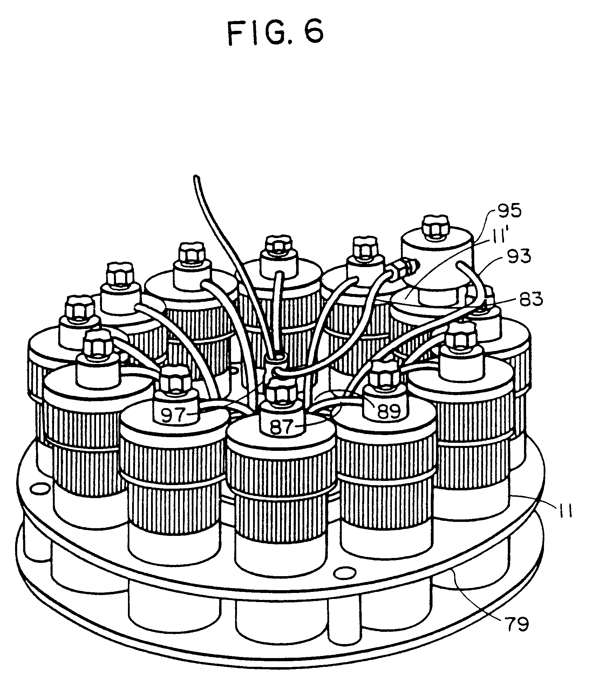

In FIG. 5 is shown microwave system or apparatus 69 which comprises a housing 71 which defines a heating chamber 73 and which includes a source of microwave radiation (a magnetron), not shown, means 75 for setting microwave power and duration cycles, and display means 77. Such are essentially the same, as those of the MDS-81-D microwave digestion apparatus marketed by CEM Corporation, and therefore do not have to be described in further detail. Inside the microwave chamber 73 is a turntable 79 in which are positioned a plurality of microwave transparent digestion containers 11 of this invention. Such containers and their relationship to the turntable, a container for receiving vented materials from the digestion containers, and an adapter for use in monitoring and controlling pressure buildups in the containers are shown in more detail in FIG. 6. Tube 83 transmits pressure from one of the digestion containers to a monitor and/or controller 81, which indicates the pressure on visual display 85, and may regulate microwave energy delivered to maintain the pressure at optimum level(s). Similar temperature monitors and/or controls may also be present. Tubes 87 transmit vented gas (and any entrained droplets of liquid) to collecting container 89 from container vents 53. The gas may be vented from the collector and the liquids (if any) may be recovered from it.

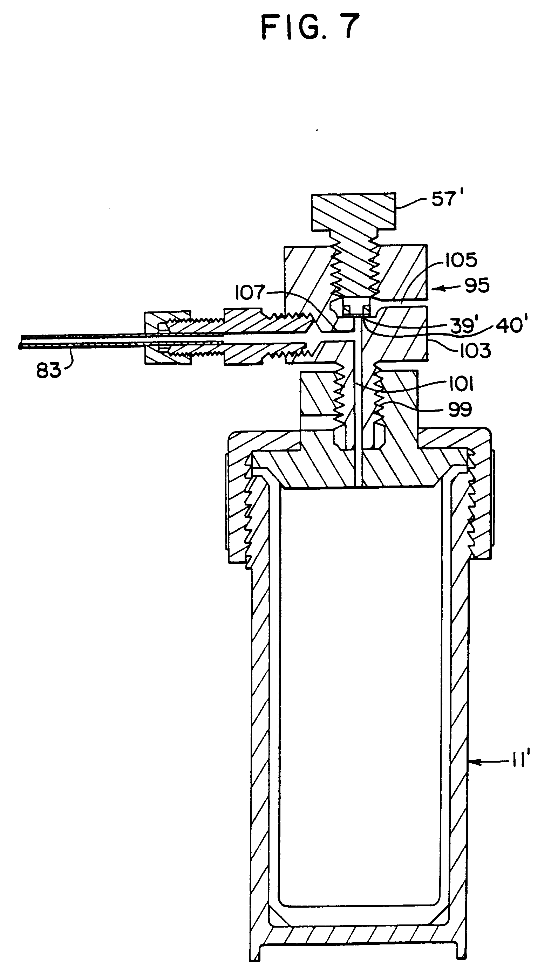

In FIG. 6 there are illustrated five digestion containers 11 and a modified digestion container 11' in the turntable 79, with venting connections or tubes 87 for transfer of vented gas from the containers to the collecting container 89 , which minimizes liquid loss. Tube 93 delivers any vented gas from container 11' to container 89 but is connected to container 11' through adapter 95, which will be described in detail with reference to FIG. 7. The purpose of discharging vented gases from the digestion vessels to container 89 is to minimize any discharges of aspirated liquid (which is often corrosive) onto the microwave apparatus container and turntable parts. Vented gas, separated from any entrained liquid droplets, can vent into the microwave apparatus chamber interior, from which it is withdrawn by a conventional exhaust fan or blower, not shown. Tube 83 transmits the internal pressure of container 11' to monitor/controller 81. Such tube is threaded through openings in tubular spindle 97 and from there is connected to the monitor/controller. It will be evident that because of the connection of tube 83 to monitor/controller 81 turntable 79 cannot revolve, but must oscillate. Such oscillating movement is important to provide essentially the same microwave power to each of the containers of material being digested so that they will all be heated at about the same rate (when the same types of heatings for digestions are being undertaken). When the containers and contents are evenly heated it becomes possible for a single pressure and/or temperature probe in one of the containers to replace similar probes in all the containers. Thus, only one adapter needs to be fitted onto one container to obtain a pressure or temperature reading and on the basis of that reading the power to the magnetron and the microwave radiation from it may be adjusted automatically either to heat the digestion mixture or to slow down or halt the rate of heating, to keep the pressure and/or temperature within the desired limits.

In FIG. 7 container 11' is shown with "adapter" 95 screwed into it so as to provide a tap in the adapter for transmitting container pressure to a monitor/controller or other suitable device, while at the same time providing rupture diaphragm protection against excessive pressures in the container. The adapter is designed to fit the closure of container 11 (or 11') when that closure has removed from it the rupture diaphragm and threaded stem 57. Adapter 95 includes a threaded portion 99 having a hollow bore 10̸1 in it that extends into a body portion 10̸3 of the adapter in which there is a seat 40̸' below rupture disc 39', against which the disc is pressed to close off passageway 10̸1, which can be opened by backing off threaded stem member 57' or by rupturing diaphragm 39', to allow venting of gas through passageway 10̸5, in a manner like that described with respect to the closure of FIG's. 1, 3 and 4. After venting, the container may be resealed, using the same rupture diaphragm. Thus, the container 11' is still protected by a rupture diaphragm against excessive pressures and can be vented by an operator by unscrewing threaded stem 57', which is like stem 57 of FIG's. 1, 3 and 4. The adapter also includes a tapping passage 10̸7 which is always in communication with the interior of the container and which transmits the pressure of such interior to line 83 and thence to the monitor and/or controller 81.

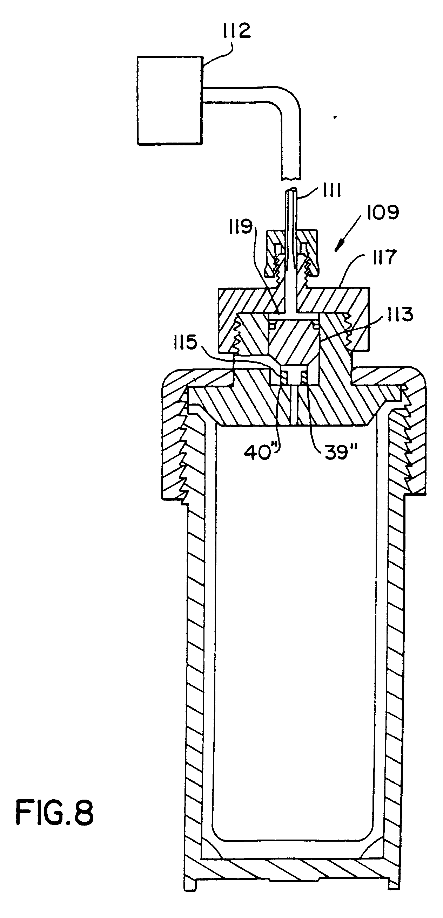

FIG. 8 is essentially like FIG. 1, but with piston means 10̸9 replacing threaded stem 57 for holding rupture disc 39'' against its seat 40̸''. As is seen, pressure tube 111 forces piston 113 downwardly, pressing contacting ring 115 against rupture disc 39''. Screw cap 117 holds the piston means assembly together and the cap and the piston top 119 limit the piston's upward travel and thereby limit the travel of disc 39''.

The advantages of this construction is that the pressure on the diaphragm may be automatically controlled by a programmed controller so as to release the diaphragm from its seat when the container reaches certain temperatures or certain pressures, or at certain times, without the need to rupture the diaphragm. However, the diaphragm, in place, protects against any possible malfunction of the controller unit. This construction also allows various programmed venting sequences, which may be according to predetermined schedules or in response to container conditions, or both.

Materials of construction of the various parts of the invented digestion container have already been described in some detail with respect to those parts suitable for the strengthening body portions and the liners. Suffice it to say that the body portion should give sufficient strength so as to withstand any normal pressures expected to be encountered during the digestion operation and the liner should be chemically resistant to the reagents and test materials being employed. In other words, any part which might contact the digesting liquid should be inert to it, and it is also desirable for other parts to be chemically inert. When it is desirable to be able to view the digesting material during digestion and when the digestion can be effected at comparatively low pressure, less than 7 kg./sq. cm. gauge, for example, the normally opaque reinforcing or strengthening body may be omitted and the clear or translucent liner or chemically resistant body part may be joined to the closure. However care should be exercised not to exceed the liner's safe limiting pressure and the liner should be protected by a rupture disc.

The capacity of the container can be such as is required for particular digestions but normally will be in the range of 50 to 200 ml., such as 75 to 150 ml. or about 100 ml., and the digestion mixture will normally be from 5 to 25% of such volume, e.g., about 10 to 20% thereof. Because digestions proceed faster at higher temperatures, with resulting higher pressures, it has been found to be desirable to increase such pressures (and corresponding equilibrium temperatures) so that the pressures are in the range of 5 to 35 kg./sq. cm., preferably 7 or 14 to 21 kg./sq. cm., and more preferably 14 to 21 kg./sq. cm.

The rupture diaphragm utilized, which is preferably of polyfluoroethylene, such as Teflon or Fluorocarbon PFA (TP) or PTFE(TP), e.g., Teflon 310 or 340, so as to rupture at a desired pressure, normally in excess of 21 kg./sq. cm. gauge (and sometimes in excess of 35 kg./sq. cm. gauge) will normally be of a thickness in the range of 100 to 500 microns, preferably 125 to 250 microns. While the rupture diaphragm will preferably be disc-shaped, it may be of other suitable shapes, too. The venting passageway downstream of the rupture diaphragm determines the force applied to the diaphragm to rupture it because such force is the product of the upstream pressure and the area of the downstream passage and the diaphragm is held tightly in position against the seat up to the passageway by the end of the threaded stem. It has been found that the downstream passageway should normally be of an area in the range of 1 to 20 sq. mm., preferably 2 to 10 sq. mm., e.g., of a diameter of about 3 mm., when circular in cross-section. The upstream passageway will normally be less than or equal in cross-sectional area to the downstream passageway, e.g., about one-half such area. Preferably both passageways will be cylindrical (although other cross-sectional shapes are also operative).

The microwave apparatus employed will normally generate microwaves of a frequency of about 2.45 gigahertz and the power of the apparatus will usually be in the range of 500 to 1,000 watts, e.g., about 600, 750 or 900 watts. Such an apparatus is normally microprocessor controlled so that various sequences of heatings and different power deliveries can be selected.

In use, the described apparatus will be employed for digesting various types of materials in solubilizing reagents, such as strong oxidizing acids, e.g., nitric acid, and other strong acids, such as sulfuric and hydrochloric acids. If alkaline reagents are to be employed the materials of construction of the various parts of the container and accessories will be selected accordingly. Among the various materials that may be digested there may be mentioned animal tissues, e.g., bovine liver, fuels and lubricants, e.g., heating and motor oils, vegetable matter, nuclear material, wastes, sediments, ores, sewage sludges and foods.

The sample to be digested is weighed into the vessel (or the liner if a lined vessel is employed, as is preferred), after which the digesting reagent is added. With a Teflon PFA liner and a suitable polyether imide strengthening body member temperatures of 200 to 300°C. are obtainable at pressures in the range of 14 to 21 kg./sq. cm., without damaging the equipment. After assembly of the container with the digestable material and reagent in it, it is placed on the turntable and the turntable is started to rotate in alternating mode (oscillation). Usually the rotational speed will be in the range of 1 to 20 revolutions per minute with the oscillations being such that the turntable moves no more than 360° in either direction. The time of digestion is that which is required under the conditions but by the method of this invention it will normally be shorter than for other microwave digestions, usually being in the range of 1 to 60 minutes or 2 to 15 minutes, e.g., about 5 to 8 minutes at a temperature in the range of 100 to 300°C., preferably 200 to 300°C., e.g., 210°, 220° and 260°C. In some cases the venting means on the container will not be utilized during the digestion but will be employed after completion of the digestion, when it is desired to remove the digested material from the container. Such venting after digestion speeds up the whole operation because it is not necessary to cool the container down to atomspheric pressure before opening it. During the venting operation the restricted passageway, shown at 41 in the drawing, slows the venting of gas, which helps to prevent any entrainment of liquid with it, thereby protecting the microwave apparatus against being damaged by such hot and corrosive liquid material.

In addition to the manual venting of the container after completion of digestion, it may also be vented during the digestion process at appropriate times. Sometimes this is desirable to remove reaction products, which removal helps to force the reaction (digestion) and at other times it may be desirable to avoid venting and to maintain internal pressure in the container, so long as it is not excessive, which extra pressure helps to raise the equilibrium temperature of the digestion mix and thereby promotes faster digestion. Ventings by use of the present containers are readily controllable and even at high pressures venting during the digestion can be effected controllably and without any losses of the samples being digested. With the use of the pressure and/or temperature monitors and controllers, as previously described, optimum sequences of heatings and ventings may be effected automatically, or such operations may be conducted manually, utilizing the described apparatuses. In some circumstances, as when nuclear materials are being treated, robots may be employed to handle them and to operate the microwave apparatus and the venting means for the digestion container.

The following examples illustrate but do not limit the invention. Unless otherwise indicated all temperatures are in °C. and all parts are by weight in these examples, this specification and the appended claims.

### EXAMPLE 1

Utilizing the digestion container illustrated in FIG. 1, with a pressure monitor (and sometimes a pressure or temperature controller, too) connected to it by means of an adapter like that shown in FIG. 7, different standard digestable materials were digested with strong reagents to test the capabilities of the present invention. In such digestions the digestion container, with a sample inside, was placed on a turntable in a CEM Corporation MDS-81-D microwave digestion apparatus, with the power set at about 170 watts, and with the turntable being in oscillating mode, rotating 360° at three oscillations per minute, and with the apparatus fan being set at maximum speed, for most effective exhaustion of any gases that might be released from the container. Several digestions of bovine liver (National Institute of Standards and Testing [N.I.S.T.] No. 1577a) were effected, utilizing different digestion conditions, sample weights and amounts of water, and in all such cases the digestions were successful, with clear yellow solutions resulting after short digestion times (usually less than ten minutes). During some such digestions the temperatures of the digesting mixes exceeded 200°C., and in some instances rose to 260°C., with pressures rising to the range of 7 to 21 kg./sq. cm., e.g., 16 or 17 kg./sq. cm., within ten minutes of the beginning of the digestion operation.

The digestion container employed was of polyfluoroethylene (Teflon 340), as were the closure parts, except for the rupture diaphragm, which was of Fluorocarbon PFA. The liner of approximately 150 ml. capacity, was approximately 11.3 cm. high, outside measurement, with the bottom and side walls thereof being about 2 mm. thick, and was 3.8 cm. in inside diameter. The strenghtening body portion or casing was of Ultem polyether imide and was about 12 cm. tall, with bottom and side walls being about 3 mm. thick. Its inside diameter matched the liner outside diameter. The rupture diaphragm was circular, about 8 mm. in diameter and about 130 microns thick. The downstream and upstream venting passageways were circular in cross-sections, with the downstream passageway being about 2 mm. in diameter and the upstream passageway being about 1.5 mm. in diameter. After addition of the test specimen to be digested, and the reagent (70% nitric acid, diluted in some cases with water) the container was sealed by applying tightening hand pressure to the tightening ridges thereon, with the applied torque being approximately 60 kg. cm.

When 0.1 g. of the sample and 5 ml. of 70% nitric acid were used the internal pressure rose to about 10 kg./sq. cm. after ten minutes and in that time digestion was complete. In another run, when 0.25 g. of the sample was digested with 5 ml. of 70% nitric acid, using the same vessel and the same power input, the pressure rose to about 13 kg./sq. cm. after ten minutes and the digestion was also satisfactory. Because it had been noted in other experiments that sharp pressure increases were sometimes obtained even after a pressure controller had turned the microwave magnetron off, the next run (with 0.5 g. of sample) was modified by diluting the nitric acid (5 ml.) with water, 2.5 ml. in one experiment and 5 ml. in the other, in successful efforts to prevent such out of control reactions. With the greater dilution by water the pressure reached about 15 kg./sq. cm. after ten minutes and with the lesser dilution it reached about 16 kg./sq. cm. after the same time. In all the runs reported herein the digestion liquid was clear yellow and resulted in a clear solution after dilution with water to 50 ml., indicative of satisfactory and complete digestion.

The above described procedure, utilizing 0.5 gram of sample, 5 ml. of 70% nitric acid, and 2.5 ml. of water, was followed in digesting U.S. Environmental Protection Agency Metal and Fish Standard No. 2227, N.I.S.T. Pine Needles No. 1575 and S.R.M. Citrus Leaves No. 1572. In all such cases the water was added to the nitric acid to prevent a runaway or rapid reaction, which otherwise could cause the rupture disc to rupture and relieve the container pressure, resulting in some losses of the samples. The digestions of such materials, under the same conditions as described for the bovine liver digestions, were successful, with the sample materials being completely dissolved and with the digestion liquid being soluble in water. In Test No. 2227 the pressure reached 19 kg./sq. cm. after ten minutes, in Test No. 1572 it reached 16 kg./sq. cm. after ten minutes, and in Test No. 1575 it reached 17 kg./sq. cm. after ten minutes.

In the mentioned runs the proportion of sample to HNO₃ was from 0.1 to 3.5 to 0.5 to 3.5 or 2.8 to 14.3%.

In all the previously mentioned successful digestions the rupture diaphragm held and no venting was employed until completion of the digestion, at which time the vessel was cooled to approximately room temperature in an ice bath and any remaining internal pressure, such as about 1 kg./sq. cm., was relieved by venting the container by turning the venting stem to allow the rupture diaphragm to move away from its seat a short distance, e.g., about 1 or 2 mm. Venting effected was quiet and controlled, with no losses of any of the digested materials.

The same venting diaphragm was employed for all the described runs but because of possible strains to which the diaphragms may be subjected in use and because of their low cost it will usually be desirable to employ new diaphragms for each run. Also, diaphragm release pressures can be regulated by using different diaphragm thicknesses and by modifying the downstream venting passageway size. For example, when the thickness of such a diaphragm is 130 microns and the downstream venting passageway is 3 mm. in diameter the rupture pressure is about 11 kg./sq. cm. and when the diaphragm is of Fluorocarbon PFA(TP), e.g., Teflon 310, the thickness is 250 microns and the downstream passageway is 3.2 mm. in diameter the rupture pressure is about 20 kg./sq. cm. One may obtain still higher rupture pressures, over 21 kg./sq. cm., by utilizing a PFA 340 Teflon membrane of 250 microns thickness or of 380 micron thickness, with a downstream passageway of 2 or 3.2 mm. diameter, respectively. However, it should be kept in mind that the rupture diaphragm material, although chemically resistant to the digesting reagent, is susceptible to weakening with time under pressure and at elevated temperature, so such behavior should be taken into account in choosing the material of the diaphragm, its thickness, and the size of the downstream passageway adjacent it.

Although it is an object of the present invention to conduct the digestion process without causing the rupture membrane to rupture and release contents thereof into the microwave digestion apparatus, in some of the described processes, such as those wherein 70% nitric acid is employed as the digesting agent with certain samples and without dilution by water, runaway digestion reactions have caused sudden increases in internal pressures beyond those for which the equipment was designed, and in such cases, at pressures of about 11, 23 and 36 kg./sq. cm., the rupture diaphragms have ruptured and permitted pressure release by discharging gaseous contents of the container through the venting passageway. Such discharges were comparatively quiet and controlled and did not result in substantial damage to the equipment. When such internal pressures were exceeded without pressure relief the container exploded and the contents seriously damaged the microwave apparatus and endangered nearby personnel. It was noted that upon venting pressure release due to diaphragm rupture the liner sometimes distorts somewhat, with the sides being moved inwardly. However, this does not prevent it from being used in other digestions and when so employed it resumes its initial shape soon after being put under pressure.

The above processes were conducted with single containers in the apparatus turntable, ventings were to the interior of the microwave apparatus chamber and the discharge was almost entirely in gaseous state so no harm was done to the apparatus. However, for additional safety, the digestions are also run with venting connections carrying the vented gas and any entrained materials to collecting containers, such as that illustrated in FIG. 6 and identified by numeral 89. Also, when a plurality of digestions is to be run, up to ten or more of the described digestion containers may be employed and preferably venting tubes from each of them will be connected to such collecting container. Also, by utilizing an adapter, such as that illustrated in FIG. 7, the pressure (or temperature) in a typical digesting container is transmitted to a monitor/controller, such as that identified by numeral 81 in FIG. 5, which can be programmed to regulate the microwave power delivered by a magnetron and can also be programmed to vent the containers at certain times and/or pressures, by unscrewing threaded stems 57 (and 57') or by lowering pressures on fluid powered piston equivalents of such threaded stems, which also press the rupture diaphragm against the seat to close off the venting passageway.

### EXAMPLE 2

Used motor oil samples N.I.S.T. No. 1084 and S.R.M. No. 1085 were digested, in separate operations, utilizing 0.5 g. each of sample and 10 ml. of 70% nitric acid, with the digesting containers being the same as described in Example 1. However, pressure controllers, like that described in FIG's. 5-7, were utilized. In initial runs the controllers were set to halt microwave heating when the pressure reached kg./sq. cm. (all readings in these examples are gauge readings) and the microwave apparatuses were programmed for ten minute heatings at 170 watts. However, after about 4.3 minutes the pressure controllers shut off the magnetrons and thereafter, even without additional microwave energy being supplied to the digestion mixes, the internal pressures rose to about 14 kg./sq. cm. in less than a minute. The rupture diaphragms did not rupture and the containers were not automatically vented. The containers were manually vented by unscrewing of the venting stems after ten minutes (backing them off about 1 mm.) and were then resealed. The pressure controllers were set for 9 kg./sq. cm. and the microwave apparatuses were set for 15 minutes heating at 225 watts, followed by five minutes at no power. After completions of these programs the vessels were again manually vented and resealed. The pressure controllers were next set for 13 kg./sq. cm. and the microwave apparatuses were programmed for 15 minutes at 300 watts and five minutes at zero power. After completions of these third cycles the vessels were allowed to cool to room temperature, were manually vented and the acids were diluted to 100 ml. with water. It was noted that before such dilutions all of the acids initially charged was still present in the containers. It was concluded that the digestions were very successful, as evidenced by the facts that the diluted digestion mixes were clear solutions, and none of the reagents had been lost.

Used motor oil samples are difficult to digest and by means of the present process the digestion time has been reduced considerably, compared to open digestions and lower pressure closed digestions. Also, such digestions often result in digestion liquids which produce precipitates on dilution, indicating that such digestions are not as satisfactory as those of the present invention.

### EXAMPLE 3

In a four-step process a sample of residual oil, S.R.M. No. 1634b, was digested by a process of this invention. 0.5 Gram of the sample was weighed into the same type of vessel described in Examples 1 and 2, 15 ml. of 70% nitric acid were added, the digestion container was sealed and the pressure controller was set at 5 kg./sq. cm. The magnetron was then turned on at 175 watts for ten minutes, after which the digestion container was manually vented in the manner previously described and was resealed. The pressure controller was then set for 6 kg./sq. cm. and the vessel was heated by 235 watts of microwave power for ten minutes, after which it was cooled for five minutes under no power, and was vented and resealed. The pressure controller was next set for 9 kg./sq. cm. and the digestion container was heated at 250 watts for 15 minutes, cooled by cutting the magnetron power off for five minutes, manually vented and resealed. In the fourth stage the pressure controller was set for 13 kg./sq. cm. and the vessel was heated at 250 watts for 15 minutes, cooled to room temperature and manually vented. The sealing cap was removed and water was poured into the liner to increase the volume of the liquid therein to 100 ml. Prior to dilution the solution was a clear yellow but on dilution white solids were precipitated which were filtered off. The remaining solution was ready for analysis.

Although the described digestion took longer than the desired 10 to 15 minutes (sometimes the invented digestions take as much as an hour) residual oil is very difficult to digest and even an hour's digestion time is considered to be an outstanding achievement. When lower pressure and open digestions are attempted it is found that even after over four hours there will still be black oily material left in the digestion vessel, showing that the digestion is incomplete. The present standard method for effecting such low pressure or open digestions is to utilize a mixture of sulfuric and nitric acids as the digesting acid in a closed vessel (at lower pressure than utilized in the present process), followed by open vessel digestion in a glass beaker in which the sample is heated until the sulfuic acid fumes, after which it is treated with 30% hydrogen peroxide. Such standard procedure takes considerably longer than the invented procedure described above, requires transfer of the sample between different vessels, and leaves the open sample subject to possible contamination during processing.

Various advantages of the present articles, apparatues, accessories and processes have been referred to previously but some of those, together with other advantages, will be noted here. First, the present invention permits an economy of construction by also utilizing a rupture diaphragm as a valve part, which may be moved to open a venting passageway of a container or a piece of apparatus. Because the rupture membrane still functions as such and also functions as a removable closure for venting purposes, only one venting passageway is needed, a usual valve part can be omitted, the valve structure can be made smaller and more economically, and fitting of such parts into a microwave digestion apparatus can be more easily effected. The described containers are readily resealable after venting and the rupture diaphragm is maintained in position adjacent the seat for it, so it can be resealed after venting without any special operations being required. In other words, even after venting, the chamber, in which the rupture diaphragm is present, is small enough to limit the "play" of such diaphragm so it cannot be twisted, biased, wrinkled or otherwise distorted prior to resealing. Neither can the rupture diaphragm be lost by being carried through the venting passageway with the venting gas.

The microwave heating of the polar digestion mixture allows direct heating of such mixture without the need to transfer heat through container walls, which will require such walls to be at even higher temperatures than in the present processes, thereby further softening or weakening them. The fact that digestion reagents are polar promotes good absorption by them of the microwave radiation. Also, high temperature (and high pressure) operations promote quicker digestions, saving chemist and operator time, which makes the invention of significant importance to the analytical community. In such pressure operations, although the rupture diaphragm can be so designed as to be ruptured at pressures in the range of 7 to 35 kg./sq. cm., e.g., 7 to 21 or 14 to 21, the design will be such that it will rupture at a safe pressure within such a range (under the applicable temperature and other conditions), and thereby will protect the various parts of the container and the microwave apparatus from significant damage that could otherwise occur due to explosion of the container if such a pressure is exceeded. Normally the rupture membrane will be set to rupture at a pressure within 1 to 3 kg./sq. cm. of and lower than the explosive pressure and usually it will also be such above the maximum desired operating pressure for the digestion reaction.

The invention and the processes described in the previous working examples may also be applied to heating or reacting materials, in addition to digesting them, and unlined vessels and processing equipment may also be protected by the ventable rupture diaphragm assembly. However, lined containers are highly preferred. An advantage of such lined containers that is very significant to analytical chemists is the easy pourability of the digested materials from the lined containers. After venting on completion of the digestion, and removal of the sealing collar and closure, the flanged liner facilitates easy pouring of the contents from it without the need to remove the liner from the strengthening body member. Also, in pouring from the liner, due to the liner flange overlapping the strengthening body neck, the contents do not contact the material of such strengthening body, which is less resistant to damage by the strong acid employed, and the nature of the polyfluoroethylene polymer also discourages flowing of the digested liquid down the side of the liner. Similarly, the digestion mixture is not contaminated by contact with the external parts of the container.

The invented adapter, which includes rupture means, venting control and pressure transmitting means, allows the invented container to be vented according to a timing program or according to internal pressure or temperature that is developed. The pressure passageway in the adapter, which communicates with the monitor/controller, can also be employed to carry temperature indicating means or an electrical signal to a temperature monitor/controller. Such controllers can operate the venting means of the adapter or of the other closures in a microwave apparatus to vent them at certain times or under certain pressure/temperature conditions, and times of such ventings can also be controlled. In one form, instead of the venting controlling means unscrewing the holding means, it may apply lesser pressures thereto, by means of fluid acutated members such as pistons, to promote ventings. Similarly, microwave radiation onto the containers can be controlled by such monitor/controllers. Thus, when handling extremely dangerous materials, such as radioactive materials or unpredictably reactive digestion mixtures, the operations of the present microwave digestion apparatus may be remotely controlled and may be carried out by robotic mechanisms in known manner, which needs not be described herein.

In pressurized reactions involving strong reagents it is extremely important to maintain pressure-tight seals (except at times when venting is desirable). The sealing aspect of the present invention has been described previously but in that description no details were given of the relationships of the coefficients of expansion of the body and liner materials employed. It is considered that for such coefficients of expansion to be sufficiently different, with the liner material coefficient being greater than that of the body material coefficient, in a distance equal to the length of the liner and its flange (about 11 cm.) the liner will tend to extend at least one mm. more than the body, say from 1 or 2 mm. to 8 mm. Such expansion will tightly press the liner against the closure and the strengthening body in the wedge shaped portion of the upper lip or flange, tightening the seal as the container is heated to operating digestion temperature. Differential expansions less than 1 mm. will have little effect on the seal and those in excess of 8 mm. would be expected to cause excessive distortion of the liner wall and the seal flange. The coefficient of linear thermal expansion for Ultem 1,000 resin is 5.6 x 10⁻⁵ mm./mm./°C., whereas that for Teflon 340 is about 17 x 10⁻⁵ mm./mm./°C. over the temperature ranges normally utilized (21 to 210°C.).

In the previous working examples variations in structures, materials, relationships and processing conditions may be made in accordance with the teachings in this specification and proportions of reagents may be varied ± 25%, while still staying within the ranges described in the specification, and the processes will still be operative.

## Claims

1. A ventable container (11) which is protected against damaging results of high internal pressure by rupture means (39), characterised in that the rupture means (39) is releasably positioned to seal off a venting passageway (43) to prevent venting from the container and release of internal pressure, and is controllably movable without rupturing, from such sealing location to vent the container through the venting passageway (43).

2. A ventable container (11) according to claim 1 wherein the rupture means (39) is controllably, releasably positioned with respect to a seating means (40̸) to seal off a venting passageway (43) to prevent venting from the container and to controllably release internal pressure from the container, and is controllably movable from said sealing location, without rupturing, in response to controllable movement of tightening member (57), to vent the container through passageway (43) only.

3. A ventable container (11) according to Claim 1 or 2, that is protected by rupture means (39) against possibly damaging effects of pressures higher than those for which the container was designed to be held at given temperatures, wherein said container comprises radiant energy transmissive container body means (13) for holding a material (47) to be heated by radiant energy, which body means having an opening (19) for addition and removal of such material and closure means (21) for seating the container opening (19), and wherein said venting passageway (43) comprises venting means for venting gas (45) from the container (11) when desired or when the rupture means (39) ruptures in response to elevated pressure, and wherein seating means (40̸) are included for the rupture means (39), together with means (57) for releasably holding the rupture means against the seating means (40̸) to seal off the passageway (43) and the container through the passageway when the intact rupture means (39) is held against the seating means (40̸), and for venting the container when the rupture means (39) is ruptured and/or released from the seating means (40̸).

4. A container according to claim 3, wherein the container body means (13) is microwave transmissive and has the opening (19) therein at the top thereof, the radiant energy is microwave radiation, the releasable holding means (57) contacts the rupture means (39) and applies force to it to hold it against the seating means (40̸), and the closure means (21) includes the venting means (43) therein.

5. A container according to claim 2, 3 or 4, wherein the container body means comprises a liner (17) inside a strengthening container body (13), the liner (17), strengthening container body (13) and closure means (21) are held in sealing contacts by collar means (25) which holds the closure means (21) to the container body means (13), the closure means (21) is resealable after venting, and the venting means (43) vents the container (11) when the rupture means (39) ruptures or controllably vents it when the force holding such rupture means (39) against the seating means (40̸) is released or is overcome by pressure in the container so that the rupture means (39) moves away from the seating means (40̸) a controllable distance and opens the passageway (43) for venting of gas from the container (11).

6. A container according to claim 5, in which the liner (17) and strengthening container body (13) are both essentially cylindrical, with bottoms (27,29), the closure means (21) closes the opening (19) at the top of the container (11) and includes a boss (24) that contains the means (57) for releasably holding the rupture means (39) against the seating means (40̸), and that also contains at least a portion (53) of the venting passageway, and the collar means (25) is cylindrical and is internally threaded to screw onto external threads (37) on the exterior of the strengthening container body (13).

7. A container according to claim 6 wherein the liner (17) material is of a greater coefficient of expansion than the material of the strengthening container (13), the cylindrical container (11) is vertical, the liner bottom (27) contacts the interior of the bottom (29) of the strengthening container body (13) and is tapered (31) upwardly and outwardly between the top of the cylindrical wall thereof and the top periphery of the liner, and the upper part of the strengthening container body (13) and a top part of the closure means (21) near the periphery thereof are shaped to match the liner (17) at the top thereof, which shapes of the upper parts of the liner (17) and strengthening container body (13), together with the closure means (21), make the seal between the liner (17), strengthening container body (13) and closure means (21) of increased tightness as the temperature of such parts rises, due to a greater expansion of the liner (17) than the strengthening container body (13), with the result that the liner (17) is forced into the tapered space between the strengthening container body (13) and the closure means (21), which improves the seal.

8. A container according to claim 7, wherein the closure means (21) comprises threaded stem means for screwing into a threaded vertical bore in the closure means (21), for pressing the rupture means (39) against the seating means (40̸) and for releasing the rupture means (39) from contact with the seating means (40̸) by backing off the threaded stem.

9. A container according to any one of claims 6 to 8, wherein the closure means (21) comprises a fluid operated pressure means (95) for pressing directly or indirectly against the rupture means (39) so as to press it against the seating means (40̸), which pressure means is connected to a source of controllable fluid pressure so that the pressure in the container may be determined by the pressure of the fluid pressure means.

10. A container according to any one of claims 6 to 9, wherein the liner (17), closure means (21) and rupture means (39) are of chemically resistant polyfluoroethylene, the strengthening container (13) is of a polyether imide synthetic organic polymer, and the container is suitable for heating contained material to elevated temperatures and to pressures in the range of 7 to 35 kg./sq. cm. gauge.

11. A container according to claim 10̸, wherein the rupture means (39) is a rupture membrane of a thickness in the range of 10̸0̸ to 50̸0̸ microns, the venting passageway (49) downstream of and adjacent the rupture membrane (39) is tubular and of a cross-sectional area in the range of 1 to 20̸ sq. mm., and is in the releasably holding means (57) for the rupture means (39), and a wall about such passageway seals the membrane against the seating means (40̸) and about the upstream passageway (41) when the holding means is in holding condition, and the container is operable at a pressure in the range of 14 to 21 kg./sq. cm. gauge.

12. A process for heating a material to elevated temperature in a container while simultaneously protecting the container against damage by pressure developed due to such heating, characterized in that it comprises radiant energy heating of such material in a sealed ventable container in accordance with any one of claims 2 to 11, which container is capable of withstanding pressures up to the rupture pressure of the rupture means.

13. A process according to claim 12 wherein the container body means has the opening therein at the top thereof, the radiant energy is microwave energy, the releasable holding means is adjustable in the force it applies against the rupture means to hold it against the seating means, the closure means includes the venting means therein, and the heating process is a digestion process in which the material being heated and digested is held at a temperature in the range of 10̸0̸ to 30̸0̸°C. for from 1 to 60̸ minutes at a pressure in the range of 7 to 35 kg./sq. cm. gauge.

14. A process according to claim 13, wherein the container body comprises a liner inside a strengthening container body, the liner, strengthening container body and closure means are held in sealing contact by collar means which hold the closure means to the container body means, and the venting means vents the container through the venting passageway when the rupture means ruptures or when the force holding such rupture means against the seating means is released or is overcome by pressure in the container so that the rupture means moves away from the seating means and opens the passageway for venting of gas from the container, and which comprises digesting an analytical sample at a temperature in the range of 20̸0̸ to 30̸0̸°C. for 2 to 15 minutes at a pressure in the range of 14 to 21 kg./sq. cm. and at the conclusion of the digestion the means for releasably holding the rupture means against the seating means is withdrawn so as to vent the container to equilibrate the pressure in the container with that of the atmosphere and thereby facilitate opening of the container and removal of the contents therefrom without sudden pressure release and resulting loss of contents.

15. A process according to claim 14, wherein the liner and strengthening container body are both cylindrical, the closure means closes the opening at the top of the container and includes a boss that contains the means for releasably holding the rupture means against the seating means and contains at least a portion of the venting passageway, and the collar means is cylindrical and is internally threaded to screw onto external threads on the exterior of the strengthening container body, and which comprises withdrawing the means for releasably holding the rupture means against the seating means during the digestion so as to vent gas from the container, which promotes digestion of the analytical sample.

16. A process according to claim 15, wherein the means for releasably holding the rupture means against the seating means is withdrawn and replaced more than once during the digestion so as to repeatedly vent gas from the container and thereby better promote digestion of the analytical sample.

17. A process according to claim 16, wherein the closure means comprises a fluid operated means for pressing directly or indirectly against the rupture means to hold it against the seating means, which fluid operated means is connected to a source of controllable fluid pressure, which source of fluid pressure may be set at a constant pressure for the duration of the digestion or may be set at different pressures for different times during the digestion so as to control venting and digestion conditions, and the pressure in the container is controlled by the controllable fluid pressure at either such a constant pressure or at such a plurality of predetermined pressures.

18. A process according to any one of claims 13-17, wherein the source of microwave radiation is a microwave apparatus (69) comprising a magnetron and a turntable (79) on which a plurality of the described ventable containers (11) are supported, and the microwave radiation onto the containers is regulated by a temperature probe in at least one of such containers to control the temperature of the material being digested in such containers.

19. A method of using a ventable container according to any one of claims 1 to 11, wherein said ventable container is positioned in a microwave apparatus (69) chamber where it is subjectable to microwave radiation to heat polar contents of the container and digest such contents or materials in them.

20. A method of using a plurality of ventable containers according to any one of claims 1 to 11, wherein said ventable containers are positioned in a microwave apparatus (69) chamber on a turntable (79) therein, with vents thereof connected to a collecting vessel from which venting gases are further vented.

21. A container according to any one of claims 1 to 11 for use in high temperature applications which comprises a tubular, bottomed outer strengthening container body (13), which is externally threaded (37) at the top thereof, a tubular, bottomed liner (17), the exterior bottom (27) and sides of which conform to the strengthening container body bottom (29) and interior, the material of which liner is of a greater coefficient of expansion than the material of the strengthening container body, a closure (21) at the top of the container, and a threaded collar (25) which screws onto the threaded outer strengthening container (13) and presses the closure (21) against the liner (17) and the liner (17) against the strengthening container body (13), which liner (17) has an upper peripheral upwardly and outwardly directed and tapered or wedge-shaped flange portion which matches corresponding surfaces of contacting portions of the closure (21) and the strengthening container body (13), so that upon positive differential expansion of the liner material at elevated temperature, with respect to the strengthening container body material, the tapered or wedge-shaped liner flange is pressed more tightly against the corresponding strengthening container body (13) and closure parts to improve the seals at such contacting parts.

22. A container according to claim 21, in which the strengthening container body (13) and threaded collar (25) are of a polyether imide synthetic organic polymeric plastic and the liner (17) and closure (21) are of polyfluoroethylene synthetic organic 5 polymeric plastic.

23. A closure for a container, which closure contains both rupture means (39) to protect the container against excessive pressures, and venting means (43) to facilitate venting at pressures less than those which are excessive, when such venting is desired, characterized in that it comprises a closure body (21) which fits to and seals against such container (11) when the rupture means (39) is intact and is held in place, preventing venting of gas (45) through it or past it, a venting passageway (43) in such closure body (21), intact rupture means which seals off the venting passageway (43) when held in place, and means for selectively holding the rupture means in place, sealing off the venting passageway, and for moving it out of such place or facilitating such movement in response to pressure in the container (11), so that the passageway (43) will be opened and gas (45) will be ventable from the container through it.

24. A fitting (95) that is adapted for use with a closure that is in accordance with claim 23, for connecting the container to a monitor and/or controller and transmitting container pressure to such monitor and/or controller, which comprises body means (99) for fastening to the body of the closure, which closure is without the rupture means and holding means for it, which body means contains a passageway (10̸) that connects to the venting passageway in the closure body, means (83) for transmitting the pressure of the gas in such fitting passageway to the monitor and/or controller, a venting passageway in the fitting body, in communication with the venting passageway in the closure body, intact rupture means in the fitting body venting passageway which seals off the venting passageway when held in place, and means for selectively holding the rupture means in place, sealing off the venting passageway, and for moving it out of such place or facilitating such movement in response to pressure in the container so that the passageway will be opened and gas will be ventable from the container through it.

## Patentansprüche

1. Entlüftbarer Behälter (11), welcher gegen Beschädigungsfolgen eines hohen Innendruckes durch ein Bruchmittel (39) geschützt ist, dadurch gekennzeichnet, daß das Bruchmittel (39) für ein Abdichten eines Entlüftungsdurchgangs (43) lösbar positioniert ist, um ein Entlüften aus dem Behälter zu verhindern und einen Innendruck freizusetzen, und daß es ohne ein Brechen von einer solchen Abdichtungsanordnung regelbar beweglich ist, um den Behälter durch den Entlüftungsdurchgang (43) hindurch zu entlüften.

2. Entlüftbarer Behälter (11) nach Anspruch 1, bei welchem das Bruchmittel (39) in Bezug auf eine Sitzeinrichtung (40) regelbar und freisetzbar positioniert ist, um einen Entlüftungsdurchgang (43) abzudichten und ein Entlüften aus dem Behälter zu verhindern sowie einen Innendruck von dem Behälter regelbar freizusetzen, und es regelbar beweglich ist von dieser Abdichtungsanordnung ohne ein Brechen in Abhängigkeit von einer regelbaren Bewegung eines Spannkörpers (57), um den Behälter nur über den Durchgang (43) zu entlüften.

3. Entlüftbarer Behälter (11) nach Anspruch 1 oder 2, der durch ein Bruchmittel (39) gegen mögliche Beschädigungsfolgen von Drücken höher als diejenigen geschützt ist, für welche der Behälter für ein Halten bei vorgegebenen Temperaturen entworfen wurde, wobei der Behälter eine für Strahlungsenergie durchlässige Behälterkörpereinrichtung (13) zum Halten eines Materials (47) aufweist, welches durch Strahlungsenergie erhitzt werden soll, und die Körpereinrichtung eine Öffnung (19) für die Hinzufügung und die Entfernung von solchem Material sowie eine Verschlußeinrichtung (21) für ein Befestigen der Behälteröffnung (19) aufweist, und wobei der Entlüftungsdurchgang (43) eine Entlüftungseinrichtung für ein Entlüften von Gas (45) von dem Behälter (11) aufweist, wenn es erwünscht ist oder wenn das Bruchmittel (39) in Abhängigkeit von einem erhöhten Druck bricht, und wobei eine Befestigungseinrichtung (40) für das Bruchmittel (39) zusammen mit einer Einrichtung (57) für ein lösbares Halten des Bruchmittels gegen die Befestigungseinrichtung (40) vorgesehen sind, um den Durchgang (43) und den Behälter durch den Durchgang hindurch abzudichten, wenn das unbeschädigte Bruchmittel (39) gegen die Befestigungseinrichtung (40) gehalten wird, und für ein Entlüften des Behälters, wenn das Bruchmittel (39) zerbrochen und/oder von der Befestigungseinrichtung (40) gelöst ist.

4. Behälter nach Anspruch 3, bei welchem die Behälterkörpereinrichtung (13) für Mikrowellen durchlässig ist und die in ihr vorhandene Öffnung (19) oben vorgesehen ist, die Strahlungsenergie eine Mikrowellenstrahlung ist, die lösbare Halteeinrichtung (57) das Bruchmittel (39) berührt und darauf eine Kraft ausübt, sodaß es gegen die Befestigungseinrichtung (40) gehalten wird, und die Verschlußeinrichtung (21) darin die Entlüftungseinrichtung (43) einschließt.

5. Behälter nach Anspruch 2, 3 oder 4, bei welchem die Behälterkörpereinrichtung eine Auskleidung (17) an der Innenseite eines Verstärkungsbehälterkörpers (13) aufweist, wobei die Auskleidung (17), der Verstärkungsbehäl- terkörper (13) und die Verschlußeinrichtung (21) in abdichtenden Berührungen durch eine Schultereinrichtung (24) gehalten werden, welche die Verschlußeinrichtung (21) an der Behälterkörpereinrichtung (13) hält, wobei die Verschlußeinrichtung (21) nach dem Entlüften freisetzbar ist und die Entlüftungseinrichtung (43) den Behälter (11) entlüftet, wenn das Bruchmittel (39) zerbricht oder ihn regelbar entlüftet, wenn die Kraft, welche ein solches Bruchmittel (39) gegen die Befestigungseinrichtung (40) hält, freigesetzt oder durch den Druck in dem Behälter überwunden wird, sodaß das Bruchmittel (39) über eine regelbare Entfernung von der Befestigungseinrichtung (40) weg bewegt wird und den Durchgang (43) für ein Entlüften von Gas von dem Behälter (11) öffnet.

6. Behälter nach Anspruch 5, bei welchem die Auskleidung (17) und der Verstärkungsbehälterkörper (13) beide im wesentlichen zylindrisch sind, mit Böden (27, 29), wobei die Verschlußeinrichtung (21) die Öffnung (19) oben an dem Behälter (11) verschließt und einen Vorsprung (24) aufweist, der die Einrichtung (57) für ein lösbares Halten des Bruchmittels (39) gegen die Befestigungseinrichtung (40) enthält und der auch wenigstens einen Teil (53) des Entlüftungsdurchgangs enthält, wobei die Schultereinrichtung (25) zylindrisch ist und ein Innengewinde hat, um auf ein Außengewinde (37) an der Außenseite des Verstärkungsbehälterkörpers (13) aufgeschraubt zu werden.

7. Behälter nach Anspruch 6, bei welchem das Material der Auskleidung (17) einen größeren Dehnungskoeffizienten hat als das Material des Verstärkungsbehälters (13), der zylindrische Behälter (11) vertikal ist, der Auskleidungsboden (27) die Innenseite des Bodens (29) des Verstärkungsbehälterkörpers (13) berührt und zwischen dem oberen Ende der Zylinderwand davon und dem oberen Umfang der Auskleidung nach oben und außen konisch (31) verläuft, und der obere Teil des Verstärkungsbehälterkörpers (13) und ein oberer Teil der Verschlußeinrichtung (21) nahe dem Umfang davon für eine Übereinstimmung mit der Auskleidung (17) an dem oberen Ende davon ausgebildet sind, wobei die Formgebungen der oberen Teile der Auskleidung (17) und des Verstärkungsbehälterkörpers (13) zusammen mit der Verschlußeinrichtung (21) die Dichtung zwischen der Auskleidung (17), dem Verstärkungsbehälterkörper (13) und der Verschlußeinrichtung (21) mit einer vergrößerten Dichtheit ausrüsten, wenn sich die Temperatur dieser Teile erhöht, als Folge einer größeren Dehnung der Auskleidung (17) im Vergleich zu dem Verstärkungsbehälterkörper (13), mit dem Ergebnis, daß die Auskleidung (17) in den konischen Zwischenraum zwischen dem Verstärkungsbehälterkörper (13) und der Verschlußeinrichtung (21) gedrückt wird, was die Dichtung verbessert.

8. Behälter nach Anspruch 7, bei welchem die Verschlußeinrichtung (21) eine mit einem Gewinde versehene Schafteinrichtung für ein Einschrauben in eine vertikale Gewindebohrung in der Verschlußeinrichtung (21) aufweist für ein Andrücken des Bruchmittels (39) gegen die Befestigungseinrichtung (40) und für ein Lösen des Bruchmittels (39) aus der Berührung mit der Befestigungseinrichtung (40) bei einem Zurückziehen des Gewindeschaftes.

9. Behälter nach einem der Ansprüche 6 bis 8, bei welchem die Verschlußeinrichtung (21) eine fluidbetätigte Druckeinrichtung (95) aufweist für ein direktes oder indirektes Andrücken gegen das Bruchmittel (39), sodaß es gegen die Befestigungseinrichtung (40) angedrückt wird, wobei die Druckeinrichtung an ein Quelle eines regelbaren Fluiddruckes angeschlossen ist, sodaß der Druck in dem Behälter durch den Druck der Fluiddruckeinrichtung bestimmt werden kann.

10. Behälter nach einem der Ansprüche 6 bis 9, bei welchem die Auskleidung (17), die Verschlußeinrichtung (21) und das Bruchmittel (39) aus chemisch beständigem Polyfluorethylen bestehen, der Verstärkungsbehälter (13) aus einem Polyetherimid als einem organischen Kunststoffpolymer besteht und der Behälter für ein Erhitzen des enthaltenen Materials auf erhöhte Temperaturen und Drücke in dem Bereich von 7 bis 35 kg/cm² geeignet ist.

11. Behälter nach Anspruch 10, bei welchem das Bruchmittel (39) eine durchbrechbare Membrane mit einer Dicke in dem Bereich von 100 bis 500 Microns ist, der Entlüftungsdurchgang (49) stromabwärts und neben der durchbrechbaren Membrane (39) rohrförmig ist und eine Querschnittsfläche in dem Bereich von 1 bis 20 mm² hat und sich in der freisetzbaren Halteeinrichtung (57) für das Bruchmittel (39) befindet, und eine Wand um diesen Durchgang herum die Membrane gegen die Befestigungseinrichtung (40) und um den stromaufwärts befindlichen Durchgang (41) herum abdichtet, wenn sich die Halteinrichtung in dem Haltezustand befindet, und der Behälter bei einem Druck in dem Bereich von 14 bis 21 kg/cm² betriebsbereit ist.

12. Verfahren zum Erhitzen eines Materials auf eine erhöhte Temperatur in einem Behälter, während der Behälter gleichzeitig gegen eine Beschädigung durch den Druck geschützt wird, der durch eine solche Erhitzung entwickelt wird, dadurch gekennzeichnet, daß es ein Erhitzen durch Strahlungsenergie eines solchen Materials in einem abgedichteten entlüftbaren Behälter gemäß einem der Ansprüche 2 bis 11 umfaßt und Drücken bis zur Höhe des Berstdruckes des Bruchmittels widerstehen kann.

13. Verfahren nach Anspruch 12, bei welchem die Behälter körpereinrichtung die darin ausgebildete Öffnung an dem oberen Ende aufweist, die Strahlungsenergie eine Mikrowellenenergie ist, die lösbare Halteeinrichtung bei der Kraft einstellbar ist, die sie gegen das Bruchmittel ausübt, um es gegen die Befestigungseinrichtung zu halten, die Verschlußeinrichtung die darin vorhandene Entlüftungseinrichtung einschließt und das Verfahren des Erhitzens ein Aufschlußverfahren ist, bei welchem das zu erhitzende und zu digerierende Material bei einer Temperatur in dem Bereich von 100 bis 300°C für 1 bis 60 Minuten bei einem Druck in dem Bereich von 7 bis 35 kg/cm² gehalten wird.

14. Verfahren nach Anspruch 13, bei welchem der Behälterkörper eine Auskleidung an der Innenseite eines Verstärkerbehälterkörpers aufweist, wobei die Auskleidung, der Verstärkungsbehälterkörper und die Verschlußeinrichtung in einer abdichtenden Berührung mit einer Schultereinrichtung gehalten werden, welche die Verschlußeinrichtung an der Behälterkörpereinrichtung hält, und die Entlüfungseinrichtung den Behälter über den Entlüftungsdurchgang entlüftet, wenn das Bruchmittel bricht oder wenn die Kraft, welche das Bruchmittel gegen die Befestigungseinrichtung hält, freigesetzt oder durch den Druck in dem Behälter überwunden wird, sodaß sich das Bruchmittel von der Befestigungseinrichtung weg bewegt und den Durchgang für ein Entlüften von Gas von dem Behälter öffnet, und welches ein Aufschließen einer analytischen Probe bei einer Temperatur in dem Bereich von 200 bis 300°C für 2 bis 15 Minuten bei einem Druck in dem Bereich von 14 bis 21 kg/cm² umfaßt und bei der Beendigung des Aufschlusses ein Zurückziehen der Einrichtung für ein lösbares Halten des Bruchmittels gegen die Befestigungseinrichtung, sodaß der Behälter für einen Ausgleich des Druckes in dem Behälter mit demjenigen der Atmosphäre entlüftet wird und dadurch das Öffnen des Behälters und das Entfernen des Inhalts davon ohne eine plötzliche Freisetzung des Druckes und eines daraus resultierenden Verlustes des Inhalts erleichtert wird.

15. Verfahren nach Anspruch 14, bei welchem die Auskleidung und der Verstärkungsbehälterkörper beide zylindrisch sind, die Verschlußeinrichtung die Öffnung an dem oberen Ende des Behälters verschließt und einen Vorsprung aufweist, der die Einrichtung für ein lösbares Halten des Bruchmittels gegen die Befestigungseinrichtung enthält und der wenigstens einen Teil des Entlüftungsdurchgangs aufweist, und die Schultereinrichtung zylindrisch ist und ein Innengewinde aufweist, um auf ein Außengewinde an der Außenseite des Verstärkungsbehälterkörpers aufgeschraubt zu werden, und welches ein Zurückziehen der Einrichtung für ein lösbares Halten des Bruchmittels gegen die Befestigungseinrichtung während des Aufschlusses umfaßt, sodaß das Gas von dem Behälter entlüftet wird, welches den Aufschluß der analytischen Probe fördert.

16. Verfahren nach Anspruch 15, bei welchem die Einrichtung für ein lösbares Halten des Bruchmittels gegen die Befestigungseinrichtung mehr als einmal während des Aufschlusses zurückgezogen und wieder an die Stelle gebracht wird, sodaß das Gas wiederholt von dem Behälter entlüftet und dadurch der Aufschluß der analytischen Probe verbessert gefördert wird.

17. Verfahren nach Anspruch 16, bei welchem die Verschlußeinrichtung eine fluidbetätigte Einrichtung für ein direktes oder indirektes Andrücken gegen das Bruchmittel für sein Halten gegen die Befestigungseinrichtung umfaßt, wobei die fluidbetätigte Einrichtung mit einer Quelle eines regelbaren Fluiddruckes verbunden ist, welche Quelle des Fluiddruckes auf einen konstanten Druck für die Dauer des Aufschlusses eingestellt werden kann oder auf verschiedene Drücke für unterschiedliche Zeiten während des Aufschlusses eingestellt werden kann, sodaß die Bedingungen des Entlüftens und des Aufschlusses gesteuert werden können, und der Druck in dem Behälter durch den regelbaren Fluiddruck entweder bei einem solchen konstanten Druck oder bei einer solchen Vielzahl von vorbestimmten Drücken geregelt wird.

18. Verfahren nach einem der Ansprüche 13 bis 17, bei welchem die Quelle der Mikrowellenstrahlung ein Mikrowellengerät (69) ist, welches ein Magnetron und einen Drehtisch (79) aufweist, auf welchem eine Vielzahl der beschriebenen entlüftbaren Behälter (11) abgestützt wird, und die Mikrowellenstrahlung auf die Behälter durch einen Temperaturfühler in wenigstens einem dieser Behälter geregelt wird, um die Temperatur des Materials zu regeln, welches in solchen Behältern digeriert wird.

19. Verfahren der Verwendung eines entlüftbaren Behälters nach einem der Ansprüche 1 bis 11, bei elchem die entlüftbaren Behälter in der Kammer eines Mikrowellengerätes (49) angeordnet werden, wo sie einer Mikrowellenbestrahlung aussetzbar sind, um die polaren Inhalte der Behälter zu erhitzen und die Inhalte oder darin befindlichen Matrialien zu digerieren.

20. Verfahren der Verwendung einer Vielzahl von entlüftbaren Behältern nach einem der Ansprüche 1 bis 11, bei welchem die entlüftbaren Behälter in der Kammer eines Mikrowellengerätes (49) auf einem darin befindlichen Drehtisch (79) angeordnet werden, wobei Entlüftungen davon mit einem Sammelkessel verbunden sind, von welchem Entlüftungsgase weiter entlüftet werden.

21. Behälter nach einem der Ansprüche 1 bis 11 zur Verwendung bei Hochtemperaturanwendungen, welcher einen rohrförmigen, mit einem Boden versehenen äußeren Verstärkungsbehälterkörper (13) aufweist, der an seinem oberen Ende mit einem Außengewinde (37) versehen ist, eine rohrförmige, mit einem Boden versehene Auskleidung (17), deren äußerer Boden (27) und deren Seiten mit dem Boden (29) und der Innenseite des Verstärkerbehälterkörpers übereinstimmen, wobei das Material der Auskleidung einen größeren Dehnungskoeffizienten hat als das Material des Verstärkungsbehälterkörpers, einen Verschluß (21) an dem oberen Ende des Behälters und eine mit einem Gewinde versehene Schulter (25), die auf den mit einem Gewinde versehenen äußeren Verstärkungsbehälter (13) aufgeschraubt ist und den Verschluß (21) gegen die Auskleidung (17) und die Auskleidung (17) gegen die Verstärkungsbehälterkörper (13) drückt, wobei die Auskleidung (17) einen oberen, nach oben und außen ausgerichteten und konisch verlaufenden oder keilförmigen Umfangsflanschteil aufweist, welcher mit entsprechenden Flächen von Berührungsteilen des Verschlusses (21) und des Verstärkungsbehälterkörpers (13) übereinstimmt, sodaß bei einer positiven differentiellen Dehnung des Auskleidungsmaterials bei einer erhöhten Temperatur in Bezug auf das Material des Verstärkungsbe- hälterkörpers der konisch verlaufende oder keilförmige Flansch der Auskleidung dichter gegen die entsprechenden Teile des Verstärkungsbehälterkörpers (13) und des Verschlusses gedrückt wird, um die Abdichtungen an solchen Berührungsteilen zu verbessern.

22. Behälter nach Anspruch 21, bei welchem der Verstärkungs behälterkörper (13) und die mit einem Gewinde versehene Schulter (25) aus einem Polyetherimid als einem organischen Kunststoffpolymer und die Auskleidung (17) und der Verschluß (21) aus Polyfluorethylen als einem organischen 5 Kunststoffpolymer bestehen.

23. Verschluß für einen Behälter, wobei der Verschluß sowohl ein Bruchmittel (39) für einen Schutz des Behälters gegen übermäßige Drücke und eine Entlüftungseinrichtung (43) enthält für eine erleichterte Entlüftung bei Drücken kleiner als diejenigen, die übermäßig sind, wenn eine solche Entlüftung gewünscht wird, dadurch gekennzeichnet, daß er einen Verschlußkörper (21) aufweist, der zu einem solchen Behälter (11) paßt und dagegen abgedichtet ist, wenn das Bruchmittel (39) unbeschädigt ist und am Ort gehalten wird, um ein Entlüften von Gas (45) durch es hindurch oder an ihm vorbei zu erhindern, einen Entlüftungsdurchgang (43) in einem solchen Verschlußkörper (21), ein unbeschädigtes Bruchmittel, welches den Entlüftungsdurchgang (43) abdichtet, wenn es am Ort gehalten wird, und eine Einrichtung für ein wahlweises Halten des Bruchmittels an dem Ort, wo es den Entlüftungsdurchgang abdichtet, und für sein Wegbewegen aus einem solchen Ort oder die Erleichterung einer solchen Bewegung in Abhängigkeit von dem Druck in dem Behälter (11), sodaß der Durchgang (43) geöffnet wird und das Gas (45) durch ihn hindurch von dem Behälter entlüftbar ist.

24. Paßstück (95), welches zur Verwendung bei einem Verschluß angepaßt ist, der in Übereinstimmung mit Anspruch 23 für ein Verbinden des Behälters mit einem Monitor und/oder einem Regler angepaßt ist und für eine Übermittlung des Behälterdruckes an einen solchen Monitor und/oder Regler, welches eine Körpereinrichtung (99) für eine Befestigung an dem Körper des Verschlusses aufweist, welcher Verschluß ohne das Bruchmittel und die Halteinrichtung dafür ist, wobei die Körpereinrichtung einen Durchgang (10) enthält, der mit dem Entlüftungsdurchgang in dem Verschlußkörper verbunden ist, eine Einrichtung (83) für eine Übermittlung des Gasdruckes in einem solchen Durchgang des Paßstückes an den Monitor und/oder Regler, einen Entlüftungsdurchgang in dem Körper des Paßstückes, der mit dem Entlüftungsdurchgang in dem Verschlußkörper verbunden ist, ein unbeschädigtes Bruchmittel in dem Entlüftungsdurchgang des Körpers des Paßstückes, welches den Entlüftungsdurchgang abdichtet, wenn es am Ort gehalten wird, und eine Einrichtung für ein wahlweises Halten des Bruchmittels an dem Ort, wo der Entlüftungsdurchgang abgedichtet wird, und für sein Wegbewegen von einem solchen Ort oder eine Erleichterung einer solchen Bewegung in Abhängigkeit von dem Druck in dem Behälter, sodaß der Durchgang geöffnet wird und durch ihn hindurch Gas von dem Behälter entlüftbar ist.

## Revendications

1. Récipient aéré (11) qui est protégé contre les dégradations résultant de pressions internes élevées par un moyen déchirable (39), caractérisé en ce que le moyen déchirable (39) est positionné de façon amovible pour obturer hermétiquement un passage de mise à l'air libre (43) pour empêcher la mise à l'air libre du récipient et pour relâcher la pression interne, et est déplaçable de façon contrôlée sans se déchirer, depuis sa position d'obturation pour mettre à l'air libre le récipient à travers le passage de mise a l'air libre (43).

2. Récipient aére (11) selon la revendication 1 dans lequel le moyen déchirable (39) est positionné de façon contrôlable et amovible par rapport à un moyen de siège (40) pour obturer hermétiquement un passage de mise à l'air libre (43) pour empêcher la mise à l'air libre du récipient et pour relâcher de manière contrôlée la pression interne du récipient, et est déplaçable de façon contrôlée depuis sa position d'obturation, sans se déchirer, en réponse au mouvement contrôlable d'un élément de serrage (57), pour mettre à l'air libre le récipient à travers le passage (43) seulement.

3. Récipient aéré (11) selon l'une des revendications 1 ou 2, qui est protégé par un moyen déchirable (39) contre les effets de dégradation éventuelle de pressions plus hautes que celles auxquelles le récipient doit pouvoir résister à des températures données, dans lequel ledit récipient comprend un moyen de corps de récipient (13) transparent à l'énergie de rayonnement pour contenir un matériau (47) à chauffer par l'énergie de rayonnement, ledit moyen de corps ayant une ouverture (19) pour ajouter ou enlever ledit matériau et un moyen de fermeture (21) pour s'adapter sur l'ouverture du récipient (19), et dans lequel ledit passage de mise à l'air libre (43) comprend un moyen de mise à l'air libre pour laisser échapper le gaz (45) hors du récipient (11) lorsqu'on le désire ou lorsque le moyen déchirable (39) se déchire sous l'effet de la pression élevée, et dans lequel un moyen de siège (40) est incorporé pour le moyen déchirable (39), en même temps que des moyens (57) pour tenir sélectivement le moyen déchirable contre le moyen de siège (40) pour obturer hermétiquement le passage (43) et le récipient à travers le passage lorsque le moyen déchirable intact (39) est maintenu contre le moyen de siège (40), et pour mettre à l'air libre le récipient lorsque le moyen déchirable (39) est déchiré et/ou écarté du moyen de siège (40).

4. Récipient selon la revendication 3, dans lequel le moyen de corps de récipient (13) est transparent aux micro-ondes et comprend son ouverture (19) à son sommet, l'énergie de rayonnement est une radiation à micro-ondes, le moyen de maintien sélectif (57) vient en contact du moyen déchirable (39) et applique sur lui une force pour le tenir contre les moyens de siège (40), et le moyen de fermeture (21) comprend à l'intérieur le moyen de mise à l'air libre (43).

5. Récipient selon les revendications 2, 3 ou 4, dans lequel le moyen de corps de récipient comprend une chemise (17) à l'intérieur d'un corps de récipient résistant (13), la chemise (17), le corps de récipient résistant (13) et le moyen de fermeture (21) sont tenus ensemble de façon étanche par un moyen de collier (25) qui solidarise le moyen de fermeture (21) au moyen de corps de récipient (13), le moyen de fermeture (21) est amovible après mise à l'air libre, et le moyen de mise à l'air libre (43) met à l'air libre le récipient (11) lorsque le moyen déchirable (39) se déchire ou le met à l'air libre de façon contrôlée lorsque la force tenant ledit moyen déchirable (39) contre le moyen de siège (40) est relâchée ou est dépassée par la pression dans le récipient de telle façon que le moyen déchirable (39) se déplace à l'écart du moyen de siège (40) selon une distance contrôlable et ouvre le passage (43) pour l'échappement du gaz hors du récipient (11).

6. Récipient selon la revendication 5, dans lequel la chemise (17) et le corps de récipient résistant (13) sont tous deux essentiellement cylindriques, avec des fonds (27, 29), le moyen de fermeture (21) ferme l'ouverture (19) au sommet du récipient (11) et comprend une excroissance (24) qui contient le moyen (57) pour tenir sélectivement le moyen déchirable (39) contre le moyen de siège (40), et qui contient également au moins une portion (53) du passage de mise à l'air libre, et le moyen de collier (25) est cylindrique et est taraudé intérieurement pour se visser sur un filetage externe (37) sur l'extérieur du corps de récipient résistant (13).

7. Récipient selon la revendication 6 dans lequel le matériau de la chemise (17) a un coefficient de dilatation plus grand que le matériau du corps de récipient résistant (13), le récipient cylindrique (11) est vertical, le fond de chemise (27) touche l'intérieur du fond (29) de corps de récipient résistant (13) et est resserré (31) vers le haut et vers l'extérieur entre le sommet de sa paroi cylindrique et la périphérie sommitale de la chemise, et la partie supérieure du corps de récipient résistant (13) et une partie sommitale du moyen de fermeture (21) près de sa périphérie sont conformées pour s'adapter au sommet de la chemise (17), lesdites formes de partie supérieure de chemise (17) et de corps de récipient résistant (13), ensemble avec le moyen de fermeture (21), réalisent l'étanchéité entre la chemise (17), le corps de récipient résistant (13) et le moyen de fermeture (21) selon un serrage accru lorsque la température de ces pièces s'élève, grâce à la dilatation de la chemise (17) plus grande que celle du corps de récipient résistant (13), avec le résultat que la chemise (17) est forcée à l'intérieur de l'espace resserré entre le corps de récipient résistant (13) et le moyen de fermeture (21), ce qui améliore l'étanchéité.

8. Récipient selon la revendication 7, dans lequel le moyen de fermeture (21) comprend un moyen de tige filetée pour se visser dans un trou vertical taraudé dans le moyen de fermeture (21), pour presser le moyen déchirable (39) contre le moyen de siège (40) et pour relâcher le moyen déchirable (39) à l'écart du moyen de siège (40) par le retrait de la tige filetée.

9. Récipient selon l'une quelconque des revendications 6 à 8, dans lequel le moyen de fermeture (21) comprend un moyen presseur actionné par un fluide (95) pour pousser directement ou indirectement le moyen déchirable (39) de façon à le presser contre le moyen de siège (40), ledit moyen presseur étant connecté à une source de pression de fluide contrôlable de telle sorte que la pression dans le récipient peut être déterminée par la pression du moyen de presseur à fluide.

10. Récipient selon l'une quelconque des revendications 6 à 9, dans lequel la chemise (17), le moyen de fermeture (21) et le moyen déchirable (39) sont en un polyfluoroéthylène chimiquement résistant, le corps de récipient résistant (13) est en un polymère organique synthétique de polyether imide, et le récipient est approprié pour chauffer les matériaux qu'il contient jusqu'à des températures élevées et des pressions dans la plage de 7 à 35 kg par cm².

11. Récipient selon la revendication 10, dans lequel le moyen déchirable (39) est une membrane déchirable dont l'épaisseur est dans la plage de 100 à 500 microns, le passage de mise à l'air libre (49) en aval et à proximité de la membrane déchirable (39) est tubulaire et de section comprise entre 1 et 20 mm², et est placé dans le moyen de maintien sélectif (57) pour le moyen déchirable (39), et une paroi autour de ce passage étanchéifie la membrane contre le moyen de siège (40) et autour du passage amont (41) lorsque le moyen de maintien est dans la position de maintien, et le récipient fonctionne à une pression dans la plage de 14 à 21 kg par cm².

12. Procédé pour chauffer un matériau à une température élevée dans un récipient tout en protégeant simultanément le récipient contre les dégradations par la pression développée par un tel échauffement, caractérisé en ce qu'il comprend le chauffage d'un tel matériau par une énergie de rayonnement dans un récipient aéré fermé selon l'une quelconque des revendications 2 à 11 et est capable de tenir des pressions jusqu'à une pression de déchirement du moyen de déchirement.

13. Procédé selon la revendication 12 dans lequel le moyen de corps de récipient comprend une ouverture à son sommet, l'énergie de rayonnement est une énergie à micro-ondes, le moyen de maintien amovible est ajustable en ce qui concerne la force qu'il applique contre le moyen déchirable pour le tenir contre le moyen de siège, le moyen de fermeture comprend le moyen de mise à l'air libre, et le procédé d'échauffement est un procédé de digestion dans lequel le matériau à chauffer et à digérer est maintenu à une température dans la plage de 100 à 300° C pendant 1 à 60 minutes et à une pression dans la plage de 7 à 35 kg par cm².

14. Procédé selon la revendication 13, dans lequel le corps de récipient comprend une chemise à l'intérieur d'un corps de récipient résistant, la chemise, le corps de récipient résistant et le moyen de fermeture sont tenus en contact étanche par un moyen de collier qui solidarise le moyen de fermeture au moyen de corps de récipient, et le moyen de mise à l'air libre met à l'air libre le récipient à travers le passage de mise à l'air libre lorsque le moyen déchirable se déchire ou lorsque la force de tenue dudit moyen déchirable contre le moyen de siège est relâchée ou est dépassée par la pression dans le récipient de telle sorte que le moyen déchirable se déplace à l'écart du moyen de siège et ouvre le passage pour laisser échapper le gaz hors du récipient, et qui comprend la digestion d'un échantillon analytique à une température dans la plage de 200 à 300° C pendant 2 à 15 minutes à une pression dans la plage de 14 à 21 kg par cm^{2,} et à la fin de la digestion le moyen pour tenir sélectivement le moyen déchirable contre le moyen de siège est enlevé pour mettre à l'air libre le récipient pour équilibrer la pression dans le récipient avec celle de l'atmosphère et faciliter ainsi l'ouverture du récipient et le retrait de son contenu sans une soudaine chute de pression et une perte de contenu qui en résulterait.

15. Procédé selon la revendication 14, dans lequel la chemise et le corps de récipient résistant sont tous deux cylindriques, le moyen de fermeture ferme l'ouverture au sommet du récipient et comprend une excroissance qui contient le moyen pour maintenir sélectivement le moyen déchirable contre le moyen de siège et qui contient au moins une portion du passage de mise à l'air libre, et le moyen de collier est cylindrique et est taraudé à l'intérieur pour se visser sur un filetage externe de l'extérieur du corps de récipient résistant, et qui comprend le retrait du moyen pour maintenir sélectivement le moyen déchirable contre le moyen de siège pendant la digestion de façon à laisser échapper le gaz hors du récipient, ce qui favorise la digestion de l'échantillon analytique.

16. Procédé selon la revendication 15, dans lequel le moyen pour maintenir sélectivement le moyen déchirable contre le moyen de siège est retiré et replacé plus d'une fois pendant la digestion, de façon à laisser échapper de manière répétée le gaz hors du récipient et à favoriser ainsi encore mieux la digestion de l'échantillon analytique.

17. Procédé selon la revendication 16, dans lequel le moyen de fermeture comprend un moyen actionné par un fluide pour appuyer directement ou indirectement contre le moyen déchirable pour le tenir contre le moyen de siège, ledit moyen actionné par un fluide est connecté à une source de pression de fluide contrôlable, ladite source de pression de fluide peut être réglée à une pression constante pendant la durée de la digestion ou peut être réglée à des pressions différentes pendant des durées différentes au cours de la digestion de façon à commander les conditions de mise à l'air libre et de digestion, et la pression dans le récipient est commandée par la pression de fluide contrôlable soit à une telle pression constante, soit à une telle pluralité de pressions prédéterminées.

18. Procédé selon l'une quelconque des revendications 13 à 17, dans lequel la source de radiation à micro-ondes est un appareil à micro-ondes (69) comprenant un magnétron et un plateau rotatif (79) sur lequel une pluralité de récipients aérés décrits (11) sont supportés, et la radiation à micro-ondes appliquée sur les récipients est régulée par une sonde de température dans au moins l'un desdits récipients pour commander la température du matériau à digérer dans lesdits récipients.

19. Procédé d'utilisation d'un récipient aéré selon l'une quelconque des revendications 1 à 11, dans lequel lesdits récipients aérés sont positionnés dans la chambre d'un appareil à micro-ondes (69) dans laquelle ils sont soumis à une radiation à micro-ondes pour chauffer les contenus polaires des récipients et digérer lesdits contenus ou les matériaux qu'ils contiennent.

20. Procédé d'utilisation d'une pluralité de récipients aérés selon l'une quelconque des revendications 1 à 11, dans lequel lesdits récipients aérés sont positionnés dans une chambre d'appareil à micro-ondes (69) sur un plateau tournant (79) à l'intérieur, avec leurs orifices de mise à l'air libre connectés à un récipient collecteur à partir duquel les gaz d'échappement sont ensuite évacués.

21. Récipient selon l'une quelconque des revendications 1 à 11 pour utilisation dans des applications à haute température qui comprend un corps de récipient résistant (13) extérieur tubulaire avec un fond, qui est fileté à l'extérieur (37) à son sommet, une chemise (17) tubulaire avec un fond, le fond extérieur (27) et les côtés de la chemise se conformant au fond (29) et à l'intérieur du corps de récipient résistant, le matériau de ladite chemise présentant un coefficient de dilatation plus grand que celui du matériau du corps de récipient résistant, une fermeture (21) au sommet du récipient, et un collier taraudé (25) qui se visse sur le filetage extérieur du corps de récipient résistant (13) et qui presse la fermeture (21) contre la chemise (17) et la chemise (17) contre le corps de récipient résistant (13), ladite chemise (17) comprend une portion supérieure périphérique de flasque resserrée ou en coin dirigée vers le haut et vers l'extérieur qui s'adapte sur les surfaces correspondantes de portions de contact de la fermeture (21) et du corps de récipient résistant (13), de telle façon que lors d'une expansion positive différentielle du matériau de chemise à une température élevée, par rapport au matériau de corps de récipient résistant, le flasque de chemise resserré ou en coin est pressé plus fortement contre le corps de récipient résistant correspondant (13) et les parties de fermeture pour augmenter les étanchéités sur ces parties de contact.

22. Récipient selon la revendication 21, dans lequel le corps de récipient résistant (13) et le collier taraudé (25) sont en une matière plastique polymérisée organique synthétique de polyether imide et la chemise (17) et la fermeture (21) sont en matière plastique polymérisée S organique synthétique de polyfluoroéthylène.

23. Fermeture pour un récipient, ladite fermeture contient à la fois un moyen déchirable (39) pour protéger le récipient contre des pressions excessives, et des moyens de mise à l'air libre (43) pour faciliter la mise à l'air libre à des pressions inférieures à celles qui sont excessives, lorsqu'une telle mise à l'air libre est désirée, caractérisée en ce qu'elle comprend un corps de fermeture (21) qui s'adapte de façon étanche contre un tel récipient (11) lorsque ledit moyen déchirable (39) est intact et est tenu en place, empêchant l'échappement de gaz (45) à travers elle ou au-delà d'elle, un passage de mise à l'air libre (43) dans un tel corps de fermeture (21), un moyen déchirable intact qui obture de façon étanche le passage de mise à l'air libre (43) lorsqu'il est tenu en place, et un moyen pour tenir sélectivement en place le moyen déchirable, fermant de façon étanche le passage, et pour le déplacer à l'écart de cette position ou pour faciliter ce mouvement en réponse à la pression dans le récipient (11), de façon que le passage (43) soit ouvert et que le gaz (45) s'échappe du récipient à travers elle.

24. Raccord (95) qui est adapté pour être utilisé avec une fermeture selon la revendication 23, pour connecter le récipient à un dispositif de surveillance et/ou à un dispositif de commande et pour transmettre la pression de récipient à un tel dispositif de surveillance et/ou de commmnde, qui comprend un moyen de corps (99) pour se fixer au corps de la fermeture, ladite fermeture est dépourvue de moyen déchirable et de moyen de maintien pour celui-ci, ledit moyen de corps contient un passage (10) qui se raccorde au passage de mise à l'air libre dans le corps de fermeture, un moyen (83) pour transmettre la pression de gaz dans ledit passage de raccord jusqu'au dispositif de surveillance et/ou de commande, un passage de mise à l'air libre dans le corps de raccord, en communication avec le passage de mise à l'air libre dans le corps de fermeture, un moyen déchirable intact dans le passage de mise à l'air libre de corps de raccord qui obture de façon étanche le passage de mise à l'air libre lorsqu'il est tenu en position, et un moyen pour tenir sélectivement le moyen déchirable en position, obturant de manière étanche le passage de mise à l'air libre, et pour le déplacer à l'écart de cette position ou pour faciliter ce mouvement en réponse à la pression dans le récipient de telle façon que le passage soit ouvert et que le gaz s'échappe hors du récipient à travers lui.
